(19)

Europäisches Patentamt

European Patent Office

Office européen des brevets

(11) **EP 3 431 530 A1**

(12) **EUROPEAN PATENT APPLICATION**
published in accordance with Art. 153(4) EPC

(43) Date of publication:
**23.01.2019 Bulletin 2019/04**

(21) Application number: **17766111.3**

(22) Date of filing: **03.02.2017**

(51) Int Cl.:
**C08J 5/18** (2006.01)          **H01G 4/18** (2006.01)
**B29C 55/12** (2006.01)          **B32B 27/32** (2006.01)

(86) International application number:
**PCT/JP2017/003894**

(87) International publication number:
**WO 2017/159103 (21.09.2017 Gazette 2017/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.03.2016 JP 2016053682**

(71) Applicant: **Toray Industries, Inc.**
**Tokyo 103-8666 (JP)**

(72) Inventors:
- **OKADA, Kazuma**
  **Otsu-shi**
  **Shiga 520-8558 (JP)**
- **OHKURA, Masatoshi**
  **Otsu-shi**
  **Shiga 520-8558 (JP)**
- **IMANISHI, Yasuyuki**
  **Otsu-shi**
  **Shiga 520-8558 (JP)**

(74) Representative: **Hoefer & Partner Patentanwälte mbB**
**Pilgersheimer Straße 20**
**81543 München (DE)**

(54) **BIAXIALLY ORIENTED POLYPROPYLENE FILM, METAL FILM LAMINATED FILM, AND FILM CAPACITOR**

(57)     Provided is a biaxially oriented polypropylene film which exhibits excellent electrical characteristics at high temperatures when used in capacitors for high voltages, and which has excellent withstand voltage properties at high temperatures and reliability suitable for use in capacitors and the like. A biaxially oriented polypropylene film which has a film volume resistivity of $1.0 \times 10^{14}$ $\Omega \cdot$cm or more at 125°C and a film insulation breakdown voltage of 420 V/$\mu$m or more at 125°C.

EP 3 431 530 A1

**Description**

Technical Field

The present invention relates to a polypropylene film which is suitable for wrapping and industrial applications. More particularly, the present invention relates to a biaxially oriented polypropylene film having high voltage resistance simultaneously with high reliability at high temperature which exhibits excellent electric properties at high temperature in the application of capacitor for high voltage, and which is adapted for use in the capacitor application.

Background Art

Polypropylene films are used in a wide variety of applications including wrapping applications, tape applications, and electric applications such as cable wrapping and capacitor because of their excellent transparency, mechanical properties, electric properties, and the like.

Of such applications, use of the polypropylene film for capacitor, and more specifically, for not only DA and AC capacitors but also for high voltage capacitors is particularly preferable in view of its excellent voltage resistance properties, and low loss properties.

Recently, inverter is widely introduced in electric equipment, and a stronger demand exists for smaller capacitors having increased capacity. With the demand of such markets, and in particular, the markets of automobile applications (including the hybrid car applications) and photovoltaic and wind power generation applications, there has been a situation that the polypropylene film needs to have a reduced thickness and an improved voltage resistance while retaining the productivity and the processability.

In view of the voltage resistance, productivity, processability, and heat resistance, improvement in the strength and degree of crystal orientation of the polypropylene film is particularly important. With regard to the heat resistance, higher heat resistance would be needed since the polypropylene film will be used in an even higher temperature environment particularly in consideration of the power semiconductor applications using SiC. Since the capacitors are required to have even higher heat resistance and voltage resistance, the film should have stable voltage resistance in high temperature environment in excess of 110°C. However, as described in Non-Patent Document 1, upper limit of the temperature for the use of the polypropylene film is said to be about 110°C, and stable maintenance of the voltage resistance in such temperature environment has been extremely difficult.

As a method for realizing the high performance of the thin polypropylene film in the high temperature environment, there has been proposed an improvement of the voltage resistance performance at high temperature by controlling the cooling conditions in the preparation of the starting material as well as during the casting (see, for example, Patent Document 1) . Also proposed is a method wherein voltage resistance performance at high temperature is improved by controlling the tacticity of the crystal to a particular range (see, for example, Patent Document 2). However, the polypropylene resin having a high tacticity is known be easily degradable at high temperature (see, for example, Non-Patent Document 2), and special consideration is required for the conditions used in the melt extrusion of the polypropylene resin. With regard to the films of the Patent Documents 1 and 2, improvement in the film volume resistivity and the voltage resistance performance in high temperature environment has been insufficient, and in addition, the performance of the resulting capacitor was also insufficient due to the insufficiency in the cooling temperature in the casting and inadequacy of the amount of the antioxidant added and oxygen concentration in the supply hopper.

Prior Art Documents

Patent Documents

Patent Document 1: Japanese Unexamined Patent Publication (Kokai) No. 2012-209541
Patent Document 2: Japanese Unexamined Patent Publication (Kokai) No. HEI10-53655

Non-Patent Documents

Non-Patent Document 1: Nikkei Electronics September 17, 2012, pp. 57-62 (in Japanese)
Non-Patent Document 2: Material Life, vol.9 (1997) No.4, pp. 180-187 (in Japanese)

Summary of the Invention

Problems to Be Solved by the Invention

In order to solve the problems as described above, the inventors of the present invention made an intensive study and arrived at the present invention. The present invention relates to a biaxially oriented polypropylene film having high film volume resistivity simultaneously with high voltage resistance at high temperature which exhibits excellent electric properties at high temperature in the application of capacitor for high voltage, and an object of the present invention is to provide a biaxially oriented polypropylene film exhibiting high voltage resistance simultaneously with high reliability at high temperature, particularly in high voltage capacitor application.

Means for Solving the Problems

The problems as described above can be solved by a biaxially oriented polypropylene film having a film volume resistivity at 125°C of at least $1.0 \times 10^{14}$ $\Omega$cm and a film dielectric breakdown voltage at 125°C $B_{125}$ of at least 420 V/$\mu$m.

Advantageous Effect of the Invention

The present invention provides a biaxially oriented polypropylene film having an excellent voltage resistance and high reliability in high temperature environment. Accordingly, the film can be used in a wide variety of applications including wrapping applications, tape applications, and electric applications such as cable wrapping and capacitor, and in particular, the film exhibits a high voltage resistance and reliability at high temperature particularly in the application of high voltage capacitor.

Brief Description of the Drawings

[FIG. 1] FIG. 1 is a schematic view showing the circuit used for measuring the volume resistivity.
[FIG. 2] FIG. 2 is a schematic view showing the profile in the wide angle X-ray diffraction analysis of the sheet of Example 1 which is not yet stretched.
[FIG. 3] FIG. 3 is a schematic view showing the profile in the wide angle X-ray diffraction analysis of the sheet of Comparative Example 2 which is not yet stretched.

Description of Preferred Embodiments

The biaxially oriented polypropylene film of the present invention has a film volume resistivity at 125°C of at least $1.0 \times 10^{14}$ $\Omega$·cm, preferably at least $2.0 \times 10^{14}$ $\Omega$·cm, and more preferably at least $3.0 \times 10^{14}$ $\Omega$·cm. While there is no particular upper limit, the upper limit is approximately $1.0 \times 10^{17}$ $\Omega$·cm. When the film is used for a capacitor, and more particularly, in high temperature environment, the film volume resistivity at 125°C of less than $1.0 \times 10^{14}$ $\Omega$·cm may invite increase in the leakage current, and hence, reduction in the capacity, breakage by short-circuiting, and decrease in voltage resistance caused by the temperature increase associated with the self-heat generation of the capacitor, thereby inviting loss of reliability. The film volume resistivity at 125°C is preferably controlled to the range as described above, for example, by limiting the composition of the materials used in the production to the range as will be described below and using a homopolypropylene resin having a high tacticity; by reducing oxygen concentration in the supply hopper to the lowest possible level to prevent the resin degradation by oxidation; by adjusting the amount of antioxidant added to the adequate level; by removing foreign matters in the film by high precision filtration using a filter; or by limiting the conditions used in the casting and stretching in the machine direction to the range as will be described below to facilitate formation of the meso phase in the unstretched sheet.

The biaxially oriented polypropylene film of the present invention also has a film dielectric breakdown voltage at 125°C $B_{125}$ of at least 420 V/$\mu$m, preferably at least 500 V/$\mu$m, more preferably at least 550 V/$\mu$m, and still more preferably at least 580 V/$\mu$m. While there is no particular upper limit, the upper limit is approximately 900 V/$\mu$m. When the film is used for a capacitor, the film dielectric breakdown voltage at 125°C $B_{125}$ of less than 420 V/$\mu$m may invite breakage by short-circuiting and decrease in the voltage resistance, and hence, loss of reliability. The film dielectric breakdown voltage at 125°C $B_{125}$ is preferably controlled to the range as described above, for example, by limiting the composition of the materials used in the production to the range as will be described below and using a homopolypropylene resin having a high tacticity; by reducing oxygen concentration in the supply hopper to the lowest possible level to prevent the resin degradation by oxidation; by adjusting the amount of antioxidant added to the adequate level; by removing foreign matters in the film; or by limiting the conditions used in the casting and stretching in the machine direction to the range as will be described below to form the meso phase in the unstretched sheet.

After the intensive study, the inventors of the present invention found that control of the film volume resistivity and the film dielectric breakdown voltage at high temperature of the biaxially oriented polypropylene film is important in view of realizing voltage resistance and reliability at high temperature in the application of capacitor for high voltage.

The biaxially oriented polypropylene film of the present invention preferably has a ratio of the film dielectric breakdown voltage $B_{125}$ at 125°C to the film dielectric breakdown voltage $B_{80}$ at 80°C $((B_{125})/(B_{80}))$ of at least 0.70, more preferably at least 0.75, and still more preferably at least 0.80. While there is no particular lower limit value for the $(B_{125})/(B_{80})$, the lower limit is approximately 0.10. When the film is used for a capacitor, the value of the $(B_{125})/(B_{80})$ of less than 0.70 may invite breakage by short-circuiting and decrease in the voltage resistance, and hence, loss of reliability. To control the value of the $(B_{125})/(B_{80})$ to the range as described above, decrease of the dielectric breakdown voltage in the high temperature environment of at least 80°C should be reduced to the lowest possible degree. This may be accomplished, for example, by limiting the conditions used in the casting, the stretching in the machine and transverse directions, and the heat treatment after the stretching to the range as will be described below to prevent decrease in the film orientation even at high temperature to thereby promote formation of the meso phase of the sheet which was not yet stretched; increasing the degree of orientation by the use of a higher stretching ratio; and by conducting the heat treatment at an adequate temperature to thereby suppress the relaxation of the molecular chain orientation.

The biaxially oriented polypropylene film of the present invention has sum of the heat shrinkage in the width direction and the heat shrinkage in the longitudinal direction of the film in the heat treatment at 125°C for 10 minutes of up to 5.0% in view of providing the film with a high size stability in high temperature environment and high reliability when made into a capacitor. The sum of the heat shrinkage values as described above in the biaxially oriented polypropylene film of the present invention is more preferably up to 4.5% and still more preferably up to 4.0%. While there is no particular lower limit, the lower limit is about 1% in view of the risk that the roll of the element is loosened by the heat generated in the process of capacitor production and usage. When the sum of the heat shrinkage is in excess of 5.0%, the film itself may become shrunk by the heat generated in the process of capacitor production and its usage, and the resulting bad contact with the metallized element edge (metallicon at the edge of the element) may invite decrease in the voltage resistance or the roll shrinkage of the element which results in the reduction of the capacity and breakage by short-circuiting.

The "longitudinal direction of the film" in the biaxially oriented polypropylene film of the present invention is the direction corresponding the film transportation in the film production process (hereinafter sometimes referred to as machine direction, MD), and the "width direction of the film" is the direction perpendicular to the direction of the film transportation in the film production process (hereinafter sometimes referred to as transverse direction, TD). The heat shrinkage within the range as described above can be realized by conducting a heat treatment and a relaxing treatment after the stretching such that the film is first subjected to a heat treatment at a temperature lower than the temperature used in the width direction stretching of the biaxial stretching, and then subjected to another heat treatment at a temperature higher than the temperature of the previous treatment and lower than the temperature used in the width direction stretching of the biaxial stretching, and controlling the relaxing ratio within the range as described below.

The biaxially oriented polypropylene film of the present invention preferably has a crystallization temperature Tmc as measured by DSC of up to 122°C, more preferably up to 120°C, still more preferably up to 118°C, and most preferably up to 116°C. When the Tmc of the biaxially oriented polypropylene film is in excess of 122°C, crystallization speed will be extremely high, and the meso phase formation in the sheet which is not yet stretched may be inhibited, and this may result in the decrease of the film volume resistivity and dielectric breakdown voltage in high temperature environment. As described below, to suppress the crystallization temperature without sacrificing the high tacticity, it is important to suppress the formation of the crystal nucleus promoting the crystallization. In such point of view, it is preferable that nucleating agents and long chain branched polypropylenes are not added and that the degradation in the extrusion is suppressed.

The biaxially oriented polypropylene film of the present invention preferably has an ash content in the film of less than 30 ppm (on mass bases, and this applies to the following description), more preferably less than 20 ppm, still more preferably less than 15 ppm. When the ash content of the film is at least 30 ppm, dielectric breakdown voltage of the film will be reduced and, when produced into a capacitor element, the resulting capacitor element may suffer from the reduced dielectric breakdown voltage. The ash content of the film can be controlled to the range as described above by using a starting material with a low catalyst residue.

The biaxially oriented polypropylene film of the present invention preferably has a crystallite size of 9.0 to 12.0 nm, more preferably 9.0 to 11.0 nm, and still more preferably 9.0 to 10.5 nm. When the crystallite size is in excess of 12.0 nm, the size of the amorphous part between the crystals will be increased and this is likely to invite increase in the leakage current flowing through the amorphous part. As a consequence, when the film is used for a capacitor, and more particularly, in high temperature environment, the increase in the leakage current will likely to invite decrease in the capacity and breakage by short-circuiting due to the temperature increase associated with the self-heat generation of the capacitor as well as decrease in the voltage resistance, resulting in the loss of reliability. While a smaller crystallite size is preferable in view of the situation as described above, practical lower limit of the smaller crystallite size is 9.0 nm. The crystallite size is preferably controlled to the range as described above, for example, by limiting the composition of the materials used in the production to the range as will be described below and using a homopolypropylene resin having a high tacticity; by reducing oxygen concentration in the supply hopper to the lowest possible level to prevent the resin degradation by oxidation; by adjusting the amount of antioxidant added to the adequate level; or by removing foreign matters in the film by high precision filtration using a filter. The control is most preferably accomplished by limiting the conditions used in the casting and stretching in the machine direction to the range as will be described below to thereby facilitate formation of the meso phase in the unstretched sheet and increase the stretching ratio.

The biaxially oriented polypropylene film of the present invention preferably has a meso-pentad fraction of the film of at least 0.970, and more preferably, the meso-pentad fraction is at least 0.975 and still more preferably in excess of 0.980. The meso-pentad fraction is an index for tacticity of the crystalline phase of the polypropylene measured by nuclear magnetic resonance (NMR), and a higher value is preferable since it corresponds to a higher degree of crystallization, and hence, higher melting point, and the film dielectric breakdown voltage in high temperature environment will be improved. When the meso-pentad fraction of the polypropylene film is less than 0.970, the low tacticity of the polypropylene may invite decrease in the film strength and film dielectric breakdown voltage in high temperature environment as well as film breakage during the film transfer in the step of forming a metal layer by vapor deposition or in the step of rolling the capacitor element. There is no particular upper limit for the meso-pentad fraction. In order to obtain a polypropylene film having such high meso-pentad fraction, use of a polypropylene containing polypropylene resin having a high meso-pentad fraction is preferable. A preferable method used for obtaining the polypropylene resin having a high meso-pentad fraction is adequate selection of the electron donor component in the so-called Ziegler-Natta catalyst.

In the biaxially oriented polypropylene film of the present invention, the meso-pentad fraction of the film is at least 0.970, and the crystallite size is preferably 9.0 to 12.0 nm. As described above, a higher meso-pentad fraction and a lower crystallite size are preferable. However, it has been difficult to simultaneously realize a high meso-pentad fraction and a low crystallite size by the reason as described below. While use of a high stretching ratio has been a method for reducing the crystallite size, a film having a high meso-pentad fraction exhibits high degree of crystallization with reduced stretchability, and the stretching with high stretching ratio was associated with the risk of film breakage and generation of cracks and voids by the forced stretching. Accordingly, we conducted an intensive study, and succeeded in realizing a high meso-pentad fraction simultaneously with a low crystallite size by promoting the meso phase formation of the sheet which is not yet stretched; by reducing oxygen concentration in the supply hopper to the lowest possible level to prevent the resin degradation by oxidation; by adjusting the amount of antioxidant added to the adequate level; or by removing foreign matters in the film by high precision filtration using a filter.

Next, in the biaxially oriented polypropylene film of the present invention, the molecular weight distribution $Mw/Mn$ of the film is preferably at least 2.5 and up to 7.0, more preferably at least 4.0 and up to 7.0, and still more preferably at least 4.5 and up to 6.5. When the $Mw/Mn$ is less than 2.5, the film formation may become unstable. In the meanwhile, when the $Mw/Mn$ is in excess of 7.0, $Tmc$ will increase due to the promotion of the crystallization by the high molecular weight content, and meso phase formation in the sheet which is not yet stretched may be inhibited. The high content of the low molecular weight component may also result in the loss of the film dielectric breakdown voltage. Control of the molecular weight distribution $Mw/Mn$ of the film to the range as described above is preferably accomplished by incorporating a polypropylene resin having a molecular weight distribution $Mw/Mn$ of at least 2.5 and up to 7.0, and also, by reducing oxygen concentration in the supply hopper to the lowest possible level to prevent the resin degradation by oxidation; by adjusting the amount of antioxidant added to the adequate level; or by suppressing the degradation of the polypropylene resin in the melt extrusion.

The polypropylene resin is preferably the one having a melt flow rate (MFR) in the range of 1 to 10 g/10 minutes (230°C; load, 21.18 N), and most preferably 2 to 5 g/10 minutes (230°C; load, 21.18 N) in view of the film formation ability. The method used for controlling the melt flow rate (MFR) to the value as described above include control of the average molecular weight and the molecular weight distribution.

The polypropylene resin used is preferably the one comprising a polypropylene homopolymer. The polypropylene, however, may also contain a copolymer component comprising other unsaturated hydrocarbon to the extent not adversely affecting the merits of the present invention. Alternatively, the polypropylene used may have a propylene polymer other than the propylene homopolymer blended therewith. Examples of the monomer component constituting such copolymer or blend include ethylene, propylene (in the case of copolymerized blend), 1-butene, 1-pentene, 3-methylpentene-1,3-methylbutene-1,1-hexene, 4-methylpentene-1,5-ethylhexene-1,1-octene, 1-decene, 1-dodecene, vinylcyclohexene, styrene, allylbenzene, cyclopentene, norbornene, and 5-methyl-2-norbornene. The amount copolymerized or blended is preferably less than 1 mol% (amount copolymerized) and less than 10% by mass (amount blended) in view of dielectric breakage properties and thermal size stability.

The polypropylene may also have various additives added to the extent not adversely affecting the merits of the present invention, and exemplary additives include antioxidant, thermal stabilizer, lubricating agent, antistatic agent, anti-blocking agent, filler, viscosity adjusting agent, anti-coloring agent.

Of these, adequate selection of type and amount of the antioxidant is important in view of suppressing the degradation in the melt extrusion and provision of the long-term heat resistance. More specifically, the polypropylene preferably includes at least one sterically hindered high molecular weight phenol antioxidant having a molecular weight of at least 500 and more preferably at least 1,000 simultaneously with at least one sterically hindered low molecular weight phenol antioxidant having a molecular weight of up to 500. Although there are many types of antioxidants, the preferred is use of a low molecular weight antioxidant such as 2,6-di-t-butyl-p-cresol (BHT; molecular weight, 220.4) in combination with a high molecular weight antioxidants such as 1,3,5-trimethyl-2,4,6-tris(3,5-di-t-butyl-4-hydroxybenzyl)b enzene (for example, Irganox (Registered Trademark) 1330 manufactured by BASF having a molecular weight of 775.2) or tetrakis[methylene-3(3,5-di-t-butyl-4-hydroxyphenyl)propion ate]methane (for example, Irganox (Registered Trademark) 1010 manufactured by BASF having a molecular weight of 1,177.7).

Total amount of such antioxidants remaining in the biaxially oriented polypropylene film is preferably at least 0.03% by mass and less than 0.50% by mass, more preferably at least 0.10% by mass and less than 0.40% by mass, and still more preferably at least 0.15% by mass and less than 0.30% by mass in relation to the total amount of the polypropylene. In the meanwhile, amount of the low molecular weight antioxidant such as BHT remaining in the biaxially oriented polypropylene film is preferably at least 0.001% by mass and less than 0.10% by mass, more preferably at least 0.001% by mass and less than 0.05% by mass, and still more preferably at least 0.001% by mass and less than 0.02% by mass. When the amount of the low molecular weight antioxidant such as BHT remaining in the film is excessively high, the film may suffer from an insufficient long term heat resistance. On the other hand, absence of the low molecular weight antioxidant such as BHT is likely to invite degradation in the course of melt extrusion, and hence, an increase in the leakage current at high temperature when produced into a capacitor element. The low molecular weight antioxidant such as BHT is preferably used in an amount of at least 0.05% by mass, more preferably at least 0.17% by mass, and still more preferably at least 0.20% by mass in relation to the polypropylene resin before the extrusion. On the other hand, when the total amount of the antioxidant remaining in the biaxially oriented polypropylene film is at least 0.50% by mass and the resulting product is a capacitor element, the capacitor element may suffer from adverse effects such as increase in the leakage current at high temperature and blocking at high temperature due to the bleed out of such antioxidants.

The biaxially oriented polypropylene film of the present invention may contain a resin other than the polypropylene or particles on at least one surface of the film to the extent not adversely affecting the merits of the present invention. Exemplary resins used include resins which are incompatible with the polypropylene, and surface irregularity can be provided on the surface by blending the polypropylene and thermoplastic resin incompatible with the polypropylene and constituting an islands-in-the-sea resin structure from such a blend. Exemplary thermoplastic resins that are incompatible with the polypropylene include the resins other than the polypropylene as described above, and the most preferred is use of polymethylpentene in view of its relatively high affinity with the polypropylene despite the incompatibility with the polypropylene as well as possibility of reducing the domain size.

Content of the thermoplastic resin incompatible with the polypropylene is preferably at least 0.5 part by mass and less than 5.0 parts by mass, more preferably at least 0.8 part by mass and up to 4.5 parts by mass, and still more preferably at least 1.0 part by mass and up to 4.0 parts by mass when the total amount of the polypropylene resin and the thermoplastic resin incompatible with the polypropylene constituting the layer containing the incompatible thermoplastic resin is 100 parts by mass. When the content of the thermoplastic resin incompatible with the polypropylene is at least 5.0 parts by mass, effect of the domain interface will be increased, and this may invite loss of the voltage resistance in high temperature environment. In the meanwhile, when the content of the thermoplastic resin incompatible with the polypropylene is less than 0.5 part by mass, surface irregularity may not be efficiently provided on the film surface and the resulting capacitor element may suffer from insufficient processability. Other preferable resins include vinyl polymer resins including various polyolefin resins, polyester resins, polyamide resins, polyphenylene sulfide resins, polyimide resins, and polycarbonate resins, and the particularly preferred include polymethylpentene, cycloolefin copolymer, cycloolefin polymer, and syndiotactic polystyrene.

As described above, the biaxially oriented polypropylene film of the present invention may contain particles or resins other than the polypropylene on at least one surface of the film to the extent not adversely affecting the merits of the present invention. Exemplary such particles include inorganic and organic particles, and exemplary inorganic particles include metal oxides such as silica, alumina, titania, and zirconia, barium sulfate, calcium carbonate, aluminum silicate, calcium phosphate, mica, kaolin, and clay, and of there, the preferred are metal oxides such as silica, alumina, titania, and zirconia and calcium carbonate. Exemplary organic particles include crosslinked particles of a polymethoxysilane compound, crosslinked particles of a polystyrene compound, crosslinked particles of an acryl compound, crosslinked particles of a polyurethane compound, crosslinked particles of a polyester compound, crosslinked particles of a fluorine compound, and mixtures thereof.

The inorganic particles and the organic particles as described above may have an average particle size in the range of 0.03 to 10 $\mu$m, more preferably 0.05 to 5 $\mu$m, still more preferably 0.07 to 1 $\mu$m, and most preferably 0.09 to

0.3 $\mu$m. The average particle size of less than 0.03 $\mu$m may result in the insufficient surface roughness which in turn invites in sufficiency in the handling convenience and capacitor reliability. On the other hand, the average particle size in excess of 10 $\mu$m may result in the increased risk of film breakage and dropping of the particles from the thin film which may invite insulation deficiency. The content (total content) of the particles is preferably 0.01 to 1 part by mass when the total amount of the polypropylene resin constituting the particle-containing layer and the particles is 100 parts by mass. When the content is less than 0.01 part by mass, the resulting film may suffer from insufficient handling convenience and loss of capacitor reliability. In the meanwhile, the content in excess of 1 part by mass results in the increased risk of the film breakage and loss of film volume resistivity at high temperature. The content in such range also invites increased risk of the particles dropping off the thin film which results in the insulation deficiency. The particles content is more preferably 0.02 to 0.8 part by mass, and still more preferably 0.04 to 0.6 part by mass.

In the present invention, a layer containing the particles or the thermoplastic resin incompatible with the polypropylene may be disposed on at least one surface of the film to constitute a laminate film. Exemplary methods used for the lamination include lamination by adhesion of the films, feed block system and multi-manifold system by co-extrusion, and lamination by coating, and in view of the production efficiency and cost, the preferred is the lamination by melt co-extrusion and the lamination by coating. The laminate film preferably has a constitution where two or more films are laminated in the thickness direction of the film, and more illustratively, a constitution comprising two or more layers having the layer A on at least one surface thereof. Exemplary constitution include a bilayer constitution of layer A /layer B, a trilayer constitution of layer A /layer B /layer A, a constitution comprising 4 or more layers having the layer A as the outermost surface layers. In these cases, the layer A may be defined as a layer containing a thermoplastic resin incompatible with the polypropylene, a layer containing particles, or a layer containing a polypropylene resin having a Tmc higher than the layer B.

When the biaxially oriented polypropylene film of the present invention has a constitution where two or more layers are laminated in the thickness direction, proportion of the thickness of the A layer in relation to the total thickness of the film (when the layer A is present on opposite surfaces of the film, the thickness of A is the total of the both surface layers A) is preferably 1 to 60%, more preferably 5 to 50%, and still more preferably 10 to 40% in view of facilitating the film preparation and controlling the surface morphology. When the proportion of the layer A is too high, the effects of the domain interface of the particles or the thermoplastic resin incompatible with the polypropylene will be too high, and this may result in the reduced voltage resistance in high temperature environment. On the other hand, the excessively low proportion of the layer A is associated with the failure of efficient provision of the surface roughness on the film surface, and hence, loss of processability into a capacitor element. In particular, when the film total thickness is up to 3 $\mu$m, the processability into a capacitor element will be improved when the film has the constitution as described above.

The layer A may preferably have a film thickness of less than 1 $\mu$m, more preferably up to 0.8 $\mu$m, and still more preferably up to 0.6 $\mu$m. Identification of the layer may be accomplished, for example, by preparing a cross section of the film and examining the cross section by using a scanning electron microscope (SEM), and then determining the presence of the layer A by identifying the layer A containing the particles or the thermoplastic resin incompatible with the polypropylene or by identifying the resin boundary between the layer A and the layer B.

The biaxially oriented polypropylene film of the present invention has excellent high temperature properties, and the film is well adapted for use in general industry applications and wrapping applications. The biaxially oriented polypropylene film of the present invention is of course well adapted for use in common capacitors of less than 15 $\mu$m, but the film is particularly useful for a thin heat-resistant film capacitor having the performance required for automobile applications (including the hybrid car applications) used in high temperature environment. Since the cooling during the casting will be more efficient with the decrease in the film thickness, the film thickness is preferably at least 0.5 $\mu$m and less than 8 $\mu$m, more preferably at least 0.5 $\mu$m and up to 6 $\mu$m, still more preferably at least 0.8 $\mu$m and up to 3.5 $\mu$m, and most preferably at least 0.9 $\mu$m and up to 3 $\mu$m.

The biaxially oriented polypropylene film of the present invention is well adapted for use as a dielectric film for a capacitor, and such use is not limited by the type of the capacitor. More illustratively, the capacitor may be either a foil capacitor or a metal vapor deposited capacitor in term of the electrode constitution, and also preferred is use for oil-insulated capacitors having an insulating oil impregnated and dry capacitors utterly free from the insulating oil. In view of the shape, the capacitor may be either a foil capacitor or a laminate capacitor. However, the most preferred is the use as a metal vapor deposited capacitor in view of the properties of the film of the present invention.

It is to be noted that the biaxially oriented polypropylene film normally has a low surface energy, and stable accomplishment of the metal vapor deposition is difficult. Accordingly, a surface treatment is preferably conducted before the vapor deposition to thereby facilitate metal adhesion. Exemplary surface treatments include corona discharge treatment, plasma treatment, glow discharge treatment, and flame treatment. The biaxially oriented polypropylene film typically has a surface wet tensile strength of approximately 30 mN/m, and in view of improving the adhesion with the metal layer and safety, the surface wet tensile strength is preferably increased by such surface treatment to the level of approximately 37 to 75 mN/m, more preferably 39 to 65 mN/m, and most preferably 41 to 55 mN/m.

The biaxially oriented polypropylene film of the present invention is obtained by using starting material capable of realizing the properties as described above, and conducting the biaxial stretching, the heat treatment, and the relaxing treatments. Exemplary methods used for the biaxial stretching include simultaneous biaxial stretching by inflation, simultaneous biaxial stretching with a tenter, and sequential biaxial stretching with a tenter, and of these, the preferred is use of the sequential biaxial stretching with the tenter in view of film formation stability and control of crystalline-amorphous structure, surface properties, mechanical properties, and size stability under heat.

Next, an embodiment of the method for producing the biaxially oriented polypropylene film of the present invention is described.

First, the polypropylene resin is melt extruded on a support to produce a polypropylene resin sheet, and this polypropylene resin sheet is consecutively biaxially stretched first by stretching in machine direction and then stretching in transverse direction, and the sheet is then subjected to heat treatment and relaxing treatment to thereby produce a biaxially oriented polypropylene film. In the following, this process is described in further details which by no means limit the scope of the present invention.

First, the polypropylene resin is melt extruded from a single screw extruder, and after passing the resin through a filter for filtration, the resin is extruded from a slit nozzle at a temperature of 200 to 280°C and preferably 230 to 280°C. A filter is used for the removal of the foreign matters from the molten resin by filtration, and exemplary filters include filters of sintered metal fiber, sintered metal powder, metal net, and combinations thereof. The filter used for the filtration preferably has a filtration precision cut off of up to 30 $\mu$m, more preferably up to 20 $\mu$m, still more preferably up to 15 $\mu$m, and most preferably up to 10 $\mu$m. When a film with laminate constitution is produced, the stock material A comprising the polypropylene resin having the particles or the resin incompatible with the polypropylene resin preliminarily compounded therewith is supplied to single screw extruders for the layer A, and the polypropylene resin stock material B is supplied to a single screw extruder for the layer B, and the resin laminated in layer A/layer B/layer A three layer constitution is extruded from a slit nozzle at 200 to 260°C by feed block process using melt co-extrusion.

In this process, oxygen concentration in the supply hopper is preferably up to 1% (in terms of volume and this applies to the following description), more preferably up to 0.1%, and still more preferably up to 0.01%. When the oxygen concentration is in excess of 1%, there is a risk that the polypropylene resin experiences degradation by oxidation in the extruder, and the foreign matter generated in the degradation invites loss of film volume resistivity resulting in the promotion of crystallization thereby inhibiting the meso phase formation.

Next, the melt extruded resin is solidified on a cooling drum controlled to a temperature of 10 to 110°C to obtain the sheet which is not yet stretched. In this unstretched sheet, it is preferable that meso phase has been formed, and the meso phase fraction is preferably at least 20%, more preferably at least 40%, still more preferably at least 60%, still more preferably at least 80%, and most preferably at least 90%. The meso phase fraction of the unstretched sheet may be calculated by measuring the unstretched sheet by wide angle X-ray diffractometry (WAXD) to obtain an X-ray diffraction profile, and treating the resulting X-ray diffraction profile with a peak splitting software to separate the profiles of meso phase, $\alpha$ crystal, and amorphous phase to calculate the meso phase fraction. The diffraction profile from the $\alpha$ crystal comprises 5 peaks near 14.1 degrees, near 16.9 degrees, near 18.6 degrees, near 21.6 degrees, and near 21.9 degrees observed in the measurement by wide angle X-ray diffractometry in the diffraction angle (2$\theta$) of 10 to 30 degrees. The diffraction profile from the meso phase comprises two peaks near 15 degrees and 21 degrees. The diffraction profile from the amorphous phase comprises a peak wherein the diffraction angle is near 16.2 degrees measured by the wide angle X-ray diffractometry of the molten polypropylene resin.

Exemplary methods used to bring the sheet in close contact with the casting drum include static electricity application, contacting method using surface tension of water, air knife method, press roll method, and casting in water, and the preferred are air knife method and air chamber method capable of realizing good surface evenness and the surface roughness control. In such methods, position of the air knife and the air chamber should be adequately adjusted so that the air flows toward the downstream side of the film formation so that the film is not vibrated.

In view of improving the film volume resistivity and the voltage resistance at high temperature as well as the size stability, the temperature of the casting drum is preferably up to 50°C, more preferably up to 40°C, still more preferably up to 30°C, and most preferably up to 25°C. Although there is no particular lower limit for the casting drum temperature, the temperature should be in the range allowing close contact of the sheet which is not yet stretched with the casting drum, and such temperature is typically around 10°C. The meso phase formation of the unstretched sheet will be facilitated when the casting drum is within such temperature range.

The meso phase is a phase between the crystalline phase and the amorphous phase, and this phase is specifically generated in the solidification at a very fast cooling rate from the molten state. It is generally accepted that, spherulites develop by crystallization when polypropylene is solidified by cooling, and the sheet having such spherulites developed therein will experience difference in the stretching stress between the crystalline and amorphous parts in the interior of the spherulite and between the spherulites in the course of the stretching and this results in the generation of local stretching unevenness which in turn invites thickness unevenness and structural unevenness. In the meanwhile, the meso phase which does not take a spherulite morphology enjoys high evenness without experiencing generation of the stretching unevenness, and the resulting capacitor would enjoy improved voltage resistance and reliability.

Next, this film which is not yet stretched is biaxially stretched for biaxial orientation. More specifically, the film which is not yet stretched is preliminarily heated by passing the sheet between the rolls maintained at 40 to 133°C, preferably 50 to 125°C, and more preferably 60 to 120°C, and the sheet is maintained at a temperature of preferably 60 to 140°C, more preferably 80 to 130°C, and still more preferably 90 to 125°C and the sheet is stretched to 2 to 15 folds, preferably to 5 to 12 folds, more preferably to 5.5 to 10 folds, and still more preferably to 6 to 10 folds in the longitudinal direction. The sheet is then cooled to the room temperature.

Next, the resulting film monoaxially stretched in longitudinal direction is guided to a tenter, and after gripping the film edges by clips, the film is stretched in the width direction to 7 to 15 folds, more preferably to 9 to 12 folds, and still more preferably 10.5 to 12 folds at a temperature (stretching temperature in the width direction) of 140 to 175°C and preferably 145 to 160°C.

In the subsequent heat treatment and relaxing treatment of the present invention, the heat treatment is preferably conducted by a multi-stage heat treatment such that thermal fixing (first stage heat treatment) is conducted at the temperature of at least 115°C and up to 140°C while retaining the tension in the width direction by gripping with clips and also applying relaxation of 3 to 20% in the width direction, and then, thermal fixing is conducted at a temperature in excess of the temperature used in the thermal fixing as described above (first stage heat treatment temperature) and lower than the temperature used in the stretching in the width direction (second stage heat treatment) while retaining tension in the width direction by the gripping with clips. Such multi-stage heat treatment is preferable in view of improving the film volume resistivity and the film dielectric breakdown voltage in the environment of 125°C and the size stability under heat.

In the relaxing treatment, the relaxing ratio is preferably 7 to 25%, and more preferably 10 to 20% in view of improving size stability under heat. When the relaxing ratio is in excess of 25%, the film will be excessively relaxed in the tenter and wrinkles may remain to result in the uneven vapor deposition and loss of mechanical properties. In the meanwhile, the relaxing ratio of less than 7% may result in the insufficient size stability under heat, and hence, the reduction of the capacity and breakage by short-circuiting when made into a capacitor and used in a high temperature environment.

The temperature used in the 1st stage heat treatment is preferably at least 115°C and up to 140°C, more preferably at least 120°C and up to 138°C, and still more preferably at least 125°C and up to 135°C in view of retaining the molecular chain orientation formed in the stretching and improving the mechanical properties. The heat treatment temperature of less than 115°C may result in the insufficient capacitor properties such as reduction in the capacity and breakage by short-circuiting in high temperature environment. On the other hand, the heat treatment temperature in excess of 140°C may invite progress of the relaxation of the molecular chain orientation formed in the stretching, and hence, loss of the mechanical properties.

When the temperature of the second stage heat treatment is in excess of the temperature of the first stage heat treatment and less than the temperature of the stretching in the width direction, the amorphous molecular chain with high motility whose relaxing in the first stage heat treatment had been insufficient can be relaxed to thereby improve the film volume resistivity and the film dielectric breakdown voltage as well as the size stability under heat. In such point of view, the temperature of the second stage heat treatment is preferably at least [(the temperature of the first stage heat treatment) + 5°C] and up to [(the temperature of the stretching in the width direction) - 5°C], and more preferably at least [(the temperature of the first stage heat treatment) + 8°C] and up to [(the temperature of the stretching in the width direction) - 8°C].

After the multi-stage heat treatment, the film experiences the cooling step at 80 to 100°C and then, the film is guided to the exterior of the tenter while retaining the tension in the width direction. The clips at the film edges are then released, and after slitting the film edge portions in the winder step, the film product is wound on the product roll. Before the winding of the film or in the processing step after winding the film, the surface subject to the vapor deposition is preferably subjected to a surface treatment such as corona discharge treatment or plasma treatment, and preferably plasma treatment in air, nitrogen, carbonate gas, or a mixture thereof to improve adhesion of the metal to be deposited by the vapor deposition.

Next, the production conditions which are most important in producing the film of the present invention are described. First, formation of the meso phase after obtaining the sheet by casting and before stretching is important in view of simultaneously realizing the film volume resistivity and voltage resistance (film dielectric breakdown voltage) at high temperature (125°C). In addition, it is particularly important for the meso phase formation to suppress the crystallization, and the following production conditions are preferable. The effect is insufficient when these production conditions are used alone, and the present invention is realized by combining these conditions.

- The temperature of the casting drum for the molten sheet is up to 50°C.
- The oxygen concentration in the supply hopper is up to 1%.
- The precision in the filter filtration in the melt extrusion of the resin is at the cut off level of up to 30 μm.
- Tmc of the film as measured by the DSC is up to 122°C.

In order to simultaneously realize the improvement in the film volume resistivity and the voltage resistance at high temperature, tacticity of the polypropylene constituting the film and control of the content of the antioxidant and ash remaining in the film are also important in addition to the conditions as described above. The method that has been used for improving the film dielectric breakdown voltage has been use of a polypropylene resin with a high meso-pentad fraction having a high tacticity. The polypropylene resin having a high tacticity, however, is known to have a high risk of undergoing the degradation at high temperature (see, for example, Non-Patent Document 2), and a large amount of antioxidant has been added for the purpose of suppressing the degradation. An excessively high content of the antioxidant remaining in the film, however, invites increase of the current leaking in the high temperature capacitor, and hence, loss of the film volume resistivity. In the meanwhile, control of the ash content in the film is also important for realizing the dielectric breakdown voltage. In view of the situation as described above, it is preferable that at least one, more preferably at least two, and still more preferably all of the three of the following conditions are satisfied.

- Meso-pentad fraction of the film is at least 0.96.
- Total amount of the antioxidants remaining in the biaxially oriented polypropylene film is at least 0.03% by mass and less than 0.5% by mass in relation to the total polypropylene amount.
- Ash content in the film is less than 30 ppm.

Next, the metal layer laminated film prepared by using the biaxially oriented polypropylene film according to the present invention and a film capacitor prepared by using the metal layer laminated film are described.

The metal layer laminated film according to the present invention is a metal layer laminated film having a metal layer formed on at least one surface of the biaxially oriented polypropylene film of the present invention.

In the present invention, the method used to provide a metal layer on the biaxially oriented polypropylene film surface to prepare the metal layer laminated film is not particularly limited, and an exemplary preferable method is a method wherein a metal layer such as a vapor deposited film is provided by vapor deposition of aluminum or an aluminum alloy with zinc on at least one surface of the biaxially oriented polypropylene film to thereby obtain a metal layer which would be the inner electrode of the film capacitor. In this process, another metal component such as nickel, copper, gold, silver, or chromium may be deposited by vapor deposition either simultaneously with or sequentially before or after the aluminum. If desired, a protective layer may also be formed on the vapor deposited film by using an oil or the like. When the roughness of the biaxially oriented polypropylene film surface is different between the surfaces, formation of a metal layer laminate film by forming a metal layer on the surface having a lower roughness (the smoother surface) is preferable in view of improving the voltage resistance.

In the present invention, after the formation of the metal layer, the laminate film of the metal layer may be subjected to annealing or heat treatment at a particular temperature. Alternatively, a coating of polyphenylene oxide or the like may be provided on at least one surface of the metal layer laminate film for insulation or other purpose.

The thus obtained metal layer laminated film is laminated or rolled by various methods to fabricate a film capacitor. An exemplary preferable method for producing a rolled film capacitor is as described below.

Aluminum is disposed on one surface of the biaxially oriented polypropylene film by vapor deposition under reduced pressure. In this process, the vapor deposition is carried out in stripe pattern having the margin parts extending in the longitudinal direction of the film. Next, blades are inserted in the center of each vapor deposited part and in the center of each margin part of the surface for slitting to thereby prepare reels of wound tape whose surface has the margin on one side. Of the reels of the wound tape having the margin on the left or right side, one reel of the wound tape having the margin on the left side and one reel of the wound tape having the margin on the right side are disposed one on another so that the deposited part extends in the width direction beyond the margin part, and the tapes are wound to obtain the wound body.

When the vapor deposition is provided on opposite sides, the vapor deposition of the first surface is carried out in stripe pattern having the margin parts extending in the longitudinal direction of the film, and the vapor deposition of the other surface is carried out in stripe pattern such that the margin part extending in the longitudinal direction corresponds to the center of the vapor deposited part on the first surface. Next, blades are inserted in the center of each margin part on opposite surfaces for slitting to thereby prepare reels of wound tape whose surface has the margin on one side (for example, so that when the margin is on right side on one surface, the margin is on the left side on the other surface). One of the resulting reel and the film having no vapor-deposited metal layer were combined, and two combined films were disposed one on another so that the metallized film extends in the width direction beyond the combined film, and the tapes are wound to obtain the wound body.

After removing the core from the thus produced wound body and pressing the wound film, the edges were thermally sprayed with metallicon to provide external electrodes, and leads were welded to the metallicon to provide a rolled film capacitor. A film capacitor may be used in a wide range of applications such as railway cars, automobile cars (hybrid car and electric car), solar photovoltaic power generation and wind power generation, and general home appliance, and the film capacitor of the present invention is also well adapted for use in these applications. Other applications include wrapping film, release film, process film, hygienic products, agricultural materials, building materials, medical products, and various other applications.

The methods used for measuring the characteristic properties and evaluating the merits of the present invention are as described below.

(1) Film thickness

The film thickness of the biaxially oriented polypropylene film was measured at 10 randomly selected positions in total in an atmosphere at a temperature of 23°C and relative humidity of 65% by using a contact-type electronic micrometer (model K-312A) manufactured by Anritsu Corporation. The average was used for the film thickness of the biaxially oriented polypropylene film.

(2) Volume resistivity of the film at 125°C

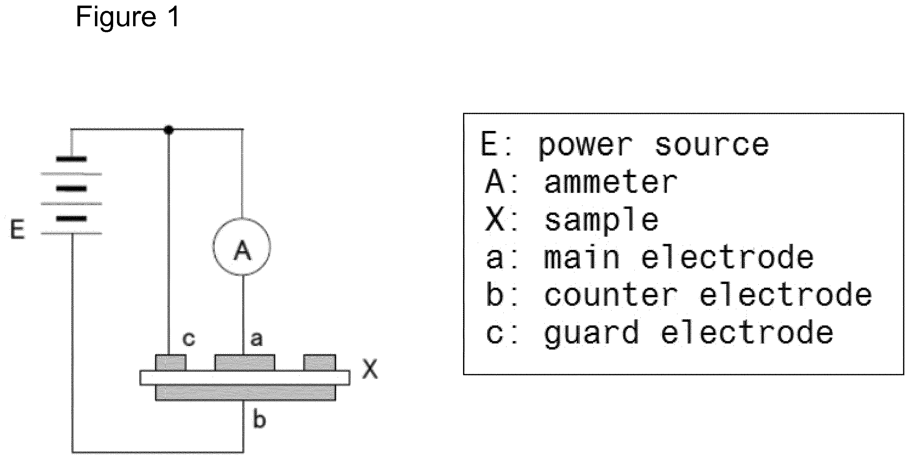

Volume resistivity of the film $R_v$ [Ω] was measured according to JIS K-6911 (2006) by incorporating the film in the circuit as shown in FIG. 1, retaining the sample piece for 30 minutes in an atmosphere of 125°C, and after charging at predetermined voltage for 1 minute, measuring the film volume resistivity $R_v$ [Ω]. From the thus obtained film volume resistivity, the film volume resistivity $p_v$ [Ω·cm] was calculated using equation (1) wherein d is diameter [cm] of the main electrode and t is thickness [cm] of the film sample. The thickness of the film sample was measured using a laser hologage manufactured by Mitutoyo Corporation by measuring the thickness of arbitrarily selected 5 locations in the sample to be measured, and their arithmetic mean was used for the sample thickness. The diameter d of the main electrode and the thickness t of the film sample were calculated by using the measurements at room temperature.

- Measurement apparatus: ULTRA HIGH RESISTANCE METER R8340A (manufactured by ADC), TEST FIXTURE TR43C (manufactured by ADVANTEST)
- Size of the film specimen: 40 mm x 40 mm
- Shape of the electrode: main electrode (φ10 mm), annular electrode (inner diameter, φ13 mm; outer diameter, φ26 mm) and counter electrode (φ28 mm)
- Material of the electrode: electroconductive paste for both the main electrode and the counter electrode
- Annular electrode: metal electrode (gold plated electrode)
- Voltage applied: 100 V/1 minute
- Pretreatment: C-90h/22±1°C/60±5%RH
- Test temperature: 125°C.

[Mathematical formula 1]

$$\text{Volume resistivity } \rho_v = (\pi d^2 / 4t) \times R_v \qquad (1)$$

(3) Film dielectric breakdown voltage $B_{125}$ in an atmosphere at 125°C and film dielectric breakdown voltage $B_{80}$ in an atmosphere at 80°C

The film was heated in an oven maintained at 125°C for 1 minute, and the measurement was conducted in the same atmosphere according to JIS C2330(2001) 7.4.11.2 method B (plate electrode method). However, the measurement of the lower electrode was conducted according to JIS C2330 (2001) 7.4.11.2 method B by using an electrode prepared from a metal plate described in the JIS C2330 and an "electroconductive rubber E-100<65>" manufactured by TOGAWA RUBBER CO., LTD. having the size same as the metal plate disposed on the metal plate. The dielectric breakdown voltage test was conducted 30 times, and the obtained values were divided by the film thickness (the (1)), converted to "V/μm", and of the 30 measurements (calculated values) in total, the average of the 20 points excluding the highest 5 values and lowest 5 values was designated $B_{125}$, the film dielectric breakdown voltage in an atmosphere of 125°C. The film dielectric breakdown voltage measured by the same procedure in an oven maintained at 80°C was designated the film dielectric breakdown voltage $B_{80}$.

(4) Heat shrinkage in the heat treatment at 125°C for 10 minutes

5 specimens with the size of width 10 mm in the width direction and length 50 mm in the longitudinal direction (measurement direction) were cut out of the biaxially oriented polypropylene film, and the specimens were marked at positions 5 mm from each end so that the sample length was 40 mm ($l_0$). Next, the test piece sandwiched between papers was heated for 10 minutes in an oven maintained at 125°C with no load, and after recovering the specimen from the oven and cooling at room temperature, the size ($l_1$) was measured and the heat shrinkage was determined by the following equation (2). The average of 5 measurements was used for the heat shrinkage.

$$\mathtt{Heat\ shrinkage\ =\ \{(l_0-l_1)/l_0\}\ x\ 100(\%)\qquad(2)}$$

(5) Meso phase fraction of the sheet which is not yet stretched (wide angle X-ray diffractometry)

Specimens having a width of 10 mm in the width direction and a length of 20 mm in the longitudinal direction were cut out from the sheet which is not yet stretched after the casting step. The measurement was conducted at room temperature by using these specimens at a diffraction angle ($2\theta$) in the range of 5 to 30 degrees. The conditions used in the measurement were as described below.

- Apparatus: nano viewer (manufactured by Rigaku Corporation)
- Wavelength: 0.15418 nm
- X ray incident direction: Through direction (the angle perpendicular to the film surface)
- Measurement time: 300 seconds

Next, the resulting diffraction profile was treated by a peak splitting software to separate into 3 components, namely, the meso phase, the $\alpha$ crystal, and the amorphous profiles. The software used for the analysis was IGOR Pro (Ver.6) software manufactured by WaveMetrics, Inc. The assumptions used the analysis are as described below;

- Peak shape function: Lorentzian function
- Peak locations: amorphous, 16.2 degrees; meso phase, 15.0 degrees and 21.0 degrees; $\alpha$ crystal, 14.1 degrees, 16.9 degrees, 18.6 degrees, 21.6 degrees, and 21.9 degrees
- Half width of the peak: amorphous, 8.0; meso phase (15.0 degrees), 3.5; meso phase (21.0 degrees), 2.7

The half width of the amorphous and the meso phase were fixed at the values as described above, while the half width was not fixed for the $\alpha$ crystal.
For the results of the peak splitting, areas ($m_{15}$ and $m_{21}$) of the diffraction profiles having peaks at 15 degrees and 21 degrees from the meso phase were calculated, and areas ($\alpha_{14.1}$, $\alpha_{16.9}$, $\alpha_{18.6}$, $\alpha_{21.6}$ and $\alpha_{21.9}$) of the diffraction profiles having peaks at 14.1 degrees, 16.9 degrees, 18.6 degrees, 21.6 degrees, and 21.9 degrees from the $\alpha$ crystal were also calculated. The calculation according to the following equation (3) was then conducted to determine proportion of the areas of the profiles from the meso phase, and this proportion was used for the meso phase fraction.

$$\mathtt{Meso\ phase\ fraction\ (\%)\ =100\ x\ (m_{15}+m_{21})/(m_{15}+m_{21}+\alpha_{14.1}}$$
$$\mathtt{+\ \alpha_{16.9}+\alpha_{18.6}+\alpha_{21.6}+\alpha_{21.9})\qquad(3)}$$

(6) Crystallization temperature Tmc of the biaxially oriented polypropylene film determined by DSC

Temperature of 3 mg of biaxially oriented polypropylene film was elevated from 30°C to 260°C at a rate of 10°C/min by using a differential scanning calorimeter (EXSTAR DSC6220 manufactured by Seiko Instruments Inc.) in nitrogen atmosphere. After retaining the temperature at 260°C for 5 minutes, the temperature was reduced to 30°C at a rate of 10°C/min. Peak temperature of the exothermic curve obtained in this temperature reduction was used for the Tmc of the biaxially oriented polypropylene film.

(7) Meso-pentad fraction

The polypropylene film was extracted in n-heptane at 60°C for two hours to remove the impurities and the additives, and the film was then dried at reduced pressure at 130°C for at least 2 hours. The resulting film was used for the sample. The sample was dissolved in a solvent, and meso-pentad fraction (mmmm) (unit, %) was determined by using a $^{13}$C-NMR under the following conditions:
Measurement conditions

- Apparatus: DRX-500 manufactured by Bruker
- Nucleus measured: $^{13}$C nucleus (resonance frequency: 125.8 MHz)
- Measurement concentration: 10% by mass
- Solvent: mixed solution (benzene : deutero o-dichlorobenzene = 1:3, volume ratio)
- Measurement temperature: 130°C
- Spin rotation number: 12 Hz
- NMR sample tube: 5 mm tube
- Pulse width: 45° (4.5 $\mu$s)
- Pulse repeat time: 10 seconds
- Data point: 64 K
- Cumulative number: 10000
- Measurement mode: complete decoupling.

Analysis conditions

Fourier transform was conducted at the LB (line broadening factor) of 1, and the mmmm peak was 21.86 ppm. Peak splitting was conducted by using WINFIT software (manufactured by Bruker). In the peak splitting, the peaks were split as described below from the side of the higher magnetic field, and automatic fitting was conducted by the software for optimizing the peak splitting. The total of the mmmm peak fractions was used for the meso-pentad fraction (mmmm).

(1) mrrm
(2) (3) rrrm (split as 2 peaks)
(4) rrrr
(5) mrmr
(6) mrmm + rmrr
(7) mmrr
(8) rmmr
(9) mmmr
(10) mmmm

The same measurement was repeated 5 times for the same sample, and the average meso-pentad fraction of the resulting values was used for the meso-pentad fraction of the sample.

(8) Molecular weight distribution, Mw/Mn

The polypropylene film was analyzed by gel permeation chromatography (GPC), and the Mw/Mn was determined by using the monodisperse polystyrene standard.
The number average molecular weight (Mn) and the weight average molecular weight (Mw) were respectively defined by using the number of molecules (Ni) at the molecular weight (Mi) at the elution position in the GPC curve obtained via molecular weight calibration curve by the following equations (4) and equation (5):

$$\text{Number average molecular weight: Mn} = \Sigma(\text{Ni} \cdot \text{Mi})/\Sigma\text{Ni} \quad (4)$$

$$\text{Weight average molecular weight: Mw} = \Sigma(\text{Ni} \cdot \text{Mi}^2)/\Sigma(\text{Ni} \cdot \text{Mi}) \quad (5)$$

Molecular weight distribution: Mw/Mn

The measurement conditions were as described below (manufacturer is indicated in the bracket)
Apparatus: gel permeation chromatograph GPC-150C (Waters)
Detector: differential refractive index detector RI sensitivity 32x, 20% (Waters)
Column: Shodex HT-806M(2) (Showa Denko K.K.)
Solvent: 1,2,4-trichlorobenzene (supplemented with 0.1 w/v% BHT) (Ardrich)
Flow rate: 1.0 ml/min
Temperature: 135°C
Specimen: dissolution conditions, 165 $\pm$ 5°C x 10 minutes (with agitation)
Concentration: 0.20 w/v%
Filtration: pore diameter of the membrane filter, 0.45 $\mu$m (Showa Denko K.K.)
Amount introduced: 200 $\mu$l.

(9) Amount of the phenol antioxidants remaining in the film

The biaxially oriented polypropylene film was placed in tetrahydrofuran at 23°C, and ultrasonication was conducted for 1 hour. After allowing the film to stand in the tetrahydrofuran at room temperature for 12 hours, the ultrasonication was conducted for another 1 hour to complete the extraction. Amount of the phenol antioxidant was determined by subjecting the resulting extract to high-performance liquid chromatography coupled with ultraviolet detector (HPLC-UVD). The apparatus used was Alliance 2695 manufactured by Waters and the column used was ODS column.

(10) Measurement of oxygen concentration in the hopper

Zirconia oxygen concentration analyzer RF-400 manufactured by Toray Engineering Co., Ltd. was connected to the piping near the extruder inlet in the interior of the extruder hopper by inserting the analyzer in the piping to measure the oxygen concentration in the hopper.

(11) Evaluation of the properties of the vapor deposited capacitor (voltage resistance and reliability at 115°C)

Aluminum was deposited on the corona discharge-treated or plasma-treated surface of the film obtained in the following Examples and Comparative Examples (the surface with a higher wet tension of the two surfaces when the treated surface of the film was unknown) by using a vacuum deposition system manufactured by ULVAC. The vacuum deposition pattern used was the one provided with the so called "T margin pattern" provided with the margin having a film resistance of 8 $\Omega$/sq extending in a direction perpendicular to the longitudinal direction. A vapor-deposited reel having a width of 50 mm was thereby provided.

Next, the capacitor element was wound by using this reel using an element winder (KAW-4NHB) manufactured by KAIDO MANUFACTURING CO., LTD., and after providing the metallicon, a heat treatment was conducted at a reduced pressure and a temperature of 120°C for 10 hours. Leads were provided with the element to finish the capacitor element.

By using the thus obtained 10 capacitor elements, the so called "step up test" was conducted by repeating the cycle of applying a voltage of 300 VDC to the capacitor element at a high temperature of 115°C and maintaining this voltage for 10 minutes and then incrementally raising the voltage applied by 50 VDC/minute.

<Processability of the element>

Processability of the element was determined by the following criteria after preparing the capacitor element by repeating the procedure as described above and visually confirming the element shape.

A: The level with no film slippage or deformation of the capacitor element with no adverse effects on the subsequent steps.
B: The level with some film slippage and deformation of the capacitor element but with no adverse effects on the subsequent steps.
D: The level with considerable film slippage and deformation of the capacitor element with some adverse effects on the subsequent steps.

A and B are suitable for use while use of D is impractical.

<Voltage resistance>

In this process, change in the capacitance was measured and plotted on a graph. The voltage when the capacitance became 70% of the initial value was divided by the film thickness (the (1)) to determine the voltage resistance. The evaluation was conducted by the following criteria.
A: at least 380 V/$\mu$m
B: at least 360 V/$\mu$m and less than 380 V/$\mu$m
C: at least 340 V/$\mu$m and less than 360 V/$\mu$m
D: less than 340 V/$\mu$m

A and B are suitable for use while C and D are in short of practical performance.

<Reliability>

After increasing the voltage until the capacitance decreased to the level of up to 10% in relation to the initial value, the capacitor element was decomposed to examine the state of breakage. The reliability was evaluated by the criteria as described below.

A: No change in the element shape was observed and no piercing breakage was noticed.
B: No change in the element shape was observed and piercing breakage within 10 film layers was noticed.
C: Change in the element shape was observed, and piercing breakage in excess of 10 film layers was noticed.
D: The shape of the element was broken.

The element could be used with no problem in the case of A, and the element was usable depending on the conditions in the case of B. The element suffered from insufficient performance in C and D.

(12) Crystallite size

The biaxially stretched polypropylene film was cut into rectangles each having a length of 4 cm and a width of 1 mm, and these rectangles were laminated to a thickness of 1 mm to prepare a specimen. The film was irradiated with X ray which entered the film at the angle perpendicular to the MD-ZD cross section, and the crystallite size was calculated from the half width $\beta$e of the crystal peak at the 2$\theta$ of about 17° ((040) face of the $\alpha$ crystal) . The equations used for the calculation were the following equations (6) and (7):
[Mathematical formula 2]

$$\text{Crystallite size} = \frac{K\lambda}{\beta \cos \theta} \qquad (6)$$

[Mathematical formula 3]

$$\beta = \sqrt{\beta_e{}^2 + \beta_0{}^2} \qquad (7)$$

In the equation, $\lambda$ is wavelength of the X-ray (= 0.15418 nm), $\beta$e is half width of the diffraction peak, $\beta$o is the corrected value of the half width (= 0.6 (transmission 2$\theta$-$\theta$ scanning) and 0.13 (reflective 2$\theta$-$\theta$ scanning)), and K is Scherrer constant (= 1.0 (transmission 2$\theta$-$\theta$ scanning) and 0.9 (reflective 2$\theta$-$\theta$ scanning)).

(Measurement apparatus)

- X ray diffractometer Model 4036A2 manufactured by Rigaku Denki

X ray source: CuKα ray (with Ni filter)
Output: 40 kV to 30 mA

- Goniometer Model 2155D manufactured by Rigaku Denki

Slit: 2 mm φ-1°-1°
Detector: scintillation counter

- Counter: Model RAD-C manufactured by Rigaku Denki Example

Next, the merits of the present invention are described in further detail by referring to the Examples.

(Example 1)

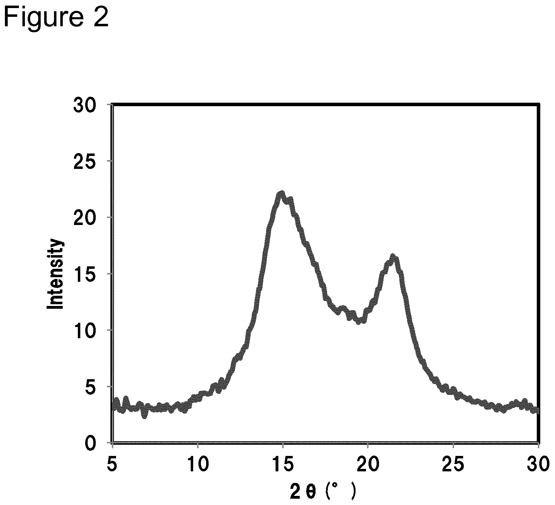

As the polypropylene resin for the layer A corresponding to the surface layers in the A/B/A three layer composite extrusion, 100 parts by mass of a polypropylene resin manufactured by Prime Polymer Co., Ltd. having a meso-pentad fraction of 0.985, a melting point of 167°C, and a melt flow rate (MFR) of 2.5 g/10 minutes as the polypropylene was blended with 4 parts by mass of a polymethylpentene resin "TPX" (Registered Trademark) MX002 (melting point, 224°C) manufactured by Mitsui Chemicals, Incorporated. The resins blended at such blend ratio was kneaded and extruded from an extruder set at 260°C, and the strands were cooled by water and cut into chips for use as the polypropylene resin stock material (A1). Next, the polypropylene resin stock material (A1) was supplied to the single screw melt extruders for the layers A, while 100 parts by mass of a polypropylene resin manufactured by Prime Polymer Co., Ltd. having a meso-pentad fraction of 0.985, a melting point of 167°C, and a melt flow rate (MFR) of 2.5 g/10 minutes as the polypropylene resin for the layer B corresponding to the base layer was supplied to the single screw melt extruder for the layer B. Each layer was melt extruded at 250°C, filtered through a sintered metal fiber filter (cutoff, 10 μm), and the amount extruded was adjusted by a feed block so that the laminate thickness ratio in the A/B/A three layer lamination was 1/8/1 (with the proportion of the surface layers A being 20% in relation to the total film thickness) . The thus melted polymer for lamination was ejected from T dies at the resin temperature of 250°C, and the resulting molten sheet was cooled and solidified by bringing the sheet in close contact with a casting drum maintained at 20°C by using an air knife to thereby obtain a sheet which is not yet stretched. Next, the sheet was preliminarily heated to 110°C by a series of rolls and subsequently passed through rolls rotating at different peripheral speeds maintained at a temperature of 114°C to stretch the sheet 6.2 folds in the longitudinal direction. The sheet was subsequently guided to a tenter, stretched 10.8 folds in the width direction at a temperature of 155°C, subjected to a heat treatment and a relaxing treatment at 130°C with the sheet relaxed to 12% in the width direction as the first stage heat treatment and relaxing treatment; and subjected to a heat treatment at 140°C with the sheet gripped by clips in the width direction as the second stage heat treatment. After the cooling step at 100°C, the sheet was subsequently guided to the exterior of the tenter, and after releasing the clips at the sheet edges, the film surface (the surface of the side in contact with the casting drum) was subjected to corona discharge treatment in the atmosphere at a treatment intensity of 25 W·min/m$^2$, and the resulting film having a film thickness of 2.1 μm was wound as a film roll. The properties of the biaxially oriented polypropylene film of this Example and the capacitor properties were as shown in Table 1. The wide angle X-ray diffraction profile obtained by the wide angle X-ray diffraction analysis for the film of Example 1 which was not yet stretched is shown in FIG. 2.

(Example 2)

A polypropylene resin manufactured by Prime Polymer Co., Ltd. having a meso-pentad fraction of 0.985, a melting point of 167°C, and a melt flow rate (MFR) of 2.5 g/10 minutes was supplied to an extruder at a temperature of 260°C and melt extruded from T slit dies at the resin temperature of 250°C in sheet form, filtered through a sintered metal fiber filter (cutoff, 10 μm), and the resulting molten sheet was cooled and solidified by bringing the sheet in close contact with a casting drum maintained at 25°C by using an air knife to thereby obtain a sheet which was not yet stretched. Next, the sheet was preliminarily heated to 115°C by a series of rolls and subsequently passed through rolls rotating at different peripheral speeds maintained at a temperature of 115°C to stretch the sheet 5.7 folds in the longitudinal direction. The sheet was subsequently guided to a tenter, stretched 10.2 folds in the width direction at a temperature of 153°C, subjected to a heat treatment and a relaxing treatment at 128°C with the sheet relaxed to 13% in the width direction as the first stage heat treatment and relaxing treatment; and subjected to a heat treatment at 138°C with the sheet gripped by clips in the width direction as the second stage heat treatment. After the cooling step at 100°C, the sheet was subsequently guided to the exterior of the tenter, and after releasing the clips at the sheet edges, the film surface (the surface of the side in contact with the casting drum) was subjected to corona discharge treatment in the atmosphere at a treatment intensity of 25 W·min/m$^2$, and the resulting film having a film thickness of 2.5 μm was wound as a film roll.

The properties of the biaxially oriented polypropylene film of this Example and the capacitor properties were as shown in Table 1.

(Example 3)

As the polypropylene resin for the layer A corresponding to the surface layers in the A/B/A three layer composite extrusion, 100 parts by mass of a polypropylene resin manufactured by Prime Polymer Co., Ltd. having a meso-pentad fraction of 0.983, a melting point of 167°C, and a melt flow rate (MFR) of 2.6 g/10 minutes as the polypropylene was blended with 4 parts by mass of a polymethylpentene resin "TPX" (Registered Trademark) MX002 (melting point, 224°C) manufactured by Mitsui Chemicals, Incorporated. The resins blended at such blend ratio was kneaded and extruded from an extruder set at 260°C, and the strands were cooled by water and cut into chips for use as the polypropylene resin stock material (A1). Next, the polypropylene resin stock material (A1) was supplied to the single screw melt extruders for the layers A, while 100 parts by mass of a polypropylene resin manufactured by Prime Polymer Co., Ltd. having a meso-pentad fraction of 0.983, a melting point of 167°C, and a melt flow rate (MFR) of 2.6 g/10 minutes as the polypropylene resin for the layer B corresponding to the base layer was supplied to the single screw melt extruder for the layer B. Each layer was melt extruded at 250°C, filtered through a sintered metal fiber filter (cutoff, 10 μm), and the amount extruded was adjusted by a feed block so that the laminate thickness ratio in the A/B/A three layer lamination was 1/8/1 (with the proportion of the surface layers A being 20% in relation to the total film thickness) . The thus melted polymer for lamination was ejected from T dies at the resin temperature of 240°C, and the resulting molten sheet was cooled and solidified by bringing the sheet in close contact with a casting drum maintained at 29°C by using an air knife to thereby obtain a sheet which was not yet stretched. Next, the sheet was preliminarily heated to 120°C by a series of rolls and subsequently passed through rolls rotating at different peripheral speeds maintained at a temperature of 120°C to stretch the sheet 5.4 folds in the longitudinal direction. The sheet was subsequently guided to a tenter, stretched 10.5 folds in the width direction at a temperature of 157°C, subjected to a heat treatment and a relaxing treatment at 136°C with the sheet relaxed to 10% in the width direction as the first stage heat treatment and relaxing treatment; and subjected to a heat treatment at 150°C with the sheet gripped by clips in the width direction as the second stage heat treatment. After the cooling step at 100°C, the sheet was subsequently guided to the exterior of the tenter, and after releasing the clips at the sheet edges, the film surface (the surface of the side in contact with the casting drum) was subjected to corona discharge treatment in the atmosphere at a treatment intensity of 25 W·min/m², and the resulting film having a film thickness of 2.2 μm was wound as a film roll. The properties of the biaxially oriented polypropylene film of this Example and the capacitor properties were as shown in Table 1.

(Example 4)

A polypropylene resin manufactured by Prime Polymer Co., Ltd. having a meso-pentad fraction of 0.983, a melting point of 167°C, and a melt flow rate (MFR) of 2.6 g/10 minutes was supplied to an extruder at a temperature of 265°C and melt extruded from T slit dies at the resin temperature of 265°C in sheet form, filtered through a sintered metal fiber filter (cutoff, 15 μm), and the resulting molten sheet was cooled and solidified by bringing the sheet in close contact with a casting drum maintained at 27°C by using an air knife to thereby obtain a sheet which was not yet stretched. Next, the sheet was preliminarily heated to 105°C by a series of rolls and subsequently passed through rolls rotating at different peripheral speeds maintained at a temperature of 115°C to stretch the sheet 5.3 folds in the longitudinal direction. The sheet was subsequently guided to a tenter, stretched 9.5 folds in the width direction at a temperature of 153°C, subjected to a heat treatment and a relaxing treatment at 137°C with the sheet relaxed to 11% in the width direction as the first stage heat treatment and relaxing treatment; and subjected to a heat treatment at 149°C with the sheet gripped by clips in the width direction as the second stage heat treatment. After the cooling step at 100°C, the sheet was subsequently guided to the exterior of the tenter, and after releasing the clips at the sheet edges, the film surface (the surface of the side in contact with the casting drum) was subjected to corona discharge treatment in the atmosphere at a treatment intensity of 25 W·min/m², and the resulting film having a film thickness of 2.9 μm was wound as a film roll. The properties of the biaxially oriented polypropylene film of this Example and the capacitor properties were as shown in Table 1.

(Example 5)

A polypropylene resin manufactured by Prime Polymer Co., Ltd. having a meso-pentad fraction of 0.978, a melting point of 166°C, and a melt flow rate (MFR) of 4.0 g/10 minutes was supplied to an extruder at a temperature of 260°C and melt extruded from T slit dies at the resin temperature of 250°C in sheet form, filtered through a sintered metal fiber filter (cutoff, 15 μm), and the resulting molten sheet was cooled and solidified by bringing the sheet in close contact with a casting drum maintained at 28°C by using an air knife to thereby obtain a sheet which was not yet stretched.

Next, the sheet was preliminarily heated to 130°C by a series of rolls and subsequently passed through rolls rotating at different peripheral speeds maintained at a temperature of 127°C to stretch the sheet 4.9 folds in the longitudinal direction. The sheet was subsequently guided to a tenter, stretched 8.8 folds in the width direction at a temperature of 155°C, subjected to a heat treatment and a relaxing treatment at 130°C with the sheet relaxed to 12% in the width direction as the first stage heat treatment and relaxing treatment; and subjected to a heat treatment at 140°C with the sheet gripped by clips in the width direction as the second stage heat treatment. After the cooling step at 100°C, the sheet was subsequently guided to the exterior of the tenter, and after releasing the clips at the sheet edges, the film surface (the surface of the side in contact with the casting drum) was subjected to corona discharge treatment in the atmosphere at a treatment intensity of 25 W·min/m$^2$, and the resulting film having a film thickness of 2.1 μm was wound as a film roll. The properties of the biaxially oriented polypropylene film of this Example and the capacitor properties were as shown in Table 1.

(Comparative Example 1)

A polypropylene resin manufactured by Korea Petrochemical Industry Corporation having a meso-pentad fraction of 0.95 and a melting point of 165°C was supplied to an extruder at a temperature of 260°C and melt extruded from T slit dies at the resin temperature of 255°C in sheet form, filtered through a sintered metal fiber filter (cutoff, 30 μm), and the resulting molten sheet was cooled and solidified by bringing the sheet in close contact with a casting drum maintained at 60°C by using an air knife to thereby obtain a sheet which was not yet stretched. Next, the sheet was preliminarily heated to 130°C by a series of rolls and subsequently passed through rolls rotating at different peripheral speeds maintained at a temperature of 115°C to stretch the sheet 4.7 folds in the longitudinal direction. The sheet was subsequently guided to a tenter, stretched 10 folds in the width direction at a temperature of 150°C, subjected to a heat treatment and a relaxing treatment at 140°C with the sheet relaxed to 6% in the width direction as the first stage heat treatment and relaxing treatment; and subjected to a heat treatment at 140°C with the sheet gripped by clips in the width direction. After the cooling step at 100°C, the sheet was subsequently guided to the exterior of the tenter, and after releasing the clips at the sheet edges, the film surface (the surface of the side in contact with the casting drum) was subjected to corona discharge treatment in the atmosphere at a treatment intensity of 25 W·min/m$^2$, and the resulting film having a film thickness of 2.5 μm was wound as a film roll. The properties of the biaxially oriented polypropylene film of this Comparative Example and the capacitor properties were as shown in Table 1.

(Comparative Example 2)

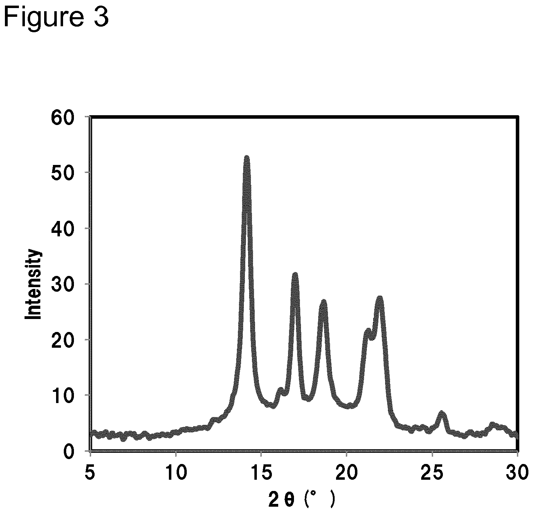

A polypropylene resin manufactured by Prime Polymer Co., Ltd. having a meso-pentad fraction of 0.978 and a melt flow rate (MFR) of 4.0 g/10 minutes was supplied to an extruder at a temperature of 260°C and melt extruded from T slit dies at the resin temperature of 250°C in sheet form, filtered through a sintered metal fiber filter (cutoff, 30 μm), and the resulting molten sheet was cooled and solidified by bringing the sheet in close contact with a casting drum maintained at 90°C by using an air knife to thereby obtain a sheet which was not yet stretched. Next, the sheet was preliminarily heated to 135°C by a series of rolls and subsequently passed through rolls rotating at different peripheral speeds maintained at a temperature of 140°C to stretch the sheet 5 folds in the longitudinal direction. The sheet was subsequently guided to a tenter, stretched 10 folds in the width direction at a temperature of 165°C, and subjected to a heat treatment and a relaxing treatment at 165°C with the sheet relaxed to 8% in the width direction as the first stage heat treatment and relaxing treatment. After the cooling step at 100°C, the sheet was subsequently guided to the exterior of the tenter, and after releasing the clips at the sheet edges, the film surface (the surface of the side in contact with the casting drum) was subjected to corona discharge treatment in the atmosphere at a treatment intensity of 25 W·min/m$^2$, and the resulting film having a film thickness of 2.9 μm was wound as a film roll. The properties of the biaxially oriented polypropylene film of this Comparative Example and the capacitor properties were as shown in Table 1. The wide angle X-ray diffraction profile of the film of Comparative Example 2 which was not yet stretched is shown in FIG. 3.

(Comparative Example 3)

A polypropylene resin manufactured by Prime Polymer Co., Ltd. having a meso-pentad fraction of 0.983, a melting point of 167°C, and a melt flow rate (MFR) of 2.6 g/10 minutes was supplied to an extruder at a temperature of 260°C, filtered through a sintered metal fiber filter (cutoff, 30 μm), melt extruded from T slit dies at the resin temperature of 260°C in sheet form, and the resulting molten sheet was cooled and solidified by bringing the sheet in close contact with a casting drum maintained at 55°C by using an air knife to thereby obtain a sheet which was not yet stretched. Next, the sheet was preliminarily heated to 105°C by a series of rolls and subsequently passed through rolls rotating at different peripheral speeds maintained at a temperature of 105°C to stretch the sheet 4.2 folds in the longitudinal direction. The sheet was subsequently guided to a tenter, stretched 8.8 folds in the width direction at a temperature of 155°C, subjected to a heat treatment and a relaxing treatment at 130°C with the sheet relaxed to 16% in the width direction as the first stage heat treatment and relaxing treatment; and subjected to a heat treatment at 140°C with the sheet gripped by clips in the width direction as the second stage heat treatment. After the cooling step at 100°C, the sheet was subsequently guided to the exterior of the tenter, and after releasing the clips at the sheet edges, the film surface (the surface of the side in contact with the casting drum) was subjected to corona discharge treatment in the atmosphere at a treatment intensity of 25 W·min/m$^2$, and the resulting film having a film thickness of 2.7 $\mu$m was wound as a film roll. The properties of the biaxially oriented polypropylene film of this Comparative Example and the capacitor properties were as shown in Table 1.

(Comparative Example 4)

A polypropylene resin manufactured by Prime Polymer Co., Ltd. having a meso-pentad fraction of 0.983 and a melt flow rate (MFR) of 2.6 g/10 minutes was blended with 5.0% by mass of a branched chain polypropylene resin manufactured by Basell (High Melt Strength Polypropylene Profax PF-814), and the blend was supplied to an extruder at a temperature of 240°C and melt extruded from T slit dies at the resin temperature of 240°C in sheet form, filtered through a sintered metal fiber filter (cutoff, 40 $\mu$m), and the resulting molten sheet was cooled and solidified by bringing the sheet in close contact with a casting drum maintained at 40°C by using an air knife to thereby obtain a sheet which was not yet stretched. Next, the sheet was preliminarily heated to 110°C by a series of rolls and subsequently passed through rolls rotating at different peripheral speeds maintained at a temperature of 110°C to stretch the sheet 5.8 folds in the longitudinal direction. The sheet was subsequently guided to a tenter, stretched 10.5 folds in the width direction at a temperature of 155°C, and subjected to a heat treatment and a relaxing treatment at 165°C with the sheet relaxed to 2% in the width direction as the first stage heat treatment and relaxing treatment. After the cooling step at 100°C, the sheet was subsequently guided to the exterior of the tenter, and after releasing the clips at the sheet edges, the film surface (the surface of the side in contact with the casting drum) was subjected to corona discharge treatment in the atmosphere at a treatment intensity of 25 W·min/m$^2$, and the resulting film having a film thickness of 2.9 $\mu$m was wound as a film roll. The properties of the biaxially oriented polypropylene film of this Comparative Example and the capacitor properties were as shown in Table 1.

(Comparative Example 5)

A polypropylene resin (Novatec SA4L) manufactured by Japan Polypropylene Corporation having a meso-pentad fraction of 0.973 and a melt flow rate (MFR) of 5.0 g/10 minutes was supplied to an extruder at a temperature of 250°C and melt extruded from T slit dies at the resin temperature of 250°C in sheet form, filtered through a sintered metal fiber filter (cutoff, 15 $\mu$m), and the resulting molten sheet was cooled and solidified by bringing the sheet in close contact with a casting drum maintained at 30°C by using an air knife to thereby obtain a sheet which was not yet stretched. Next, the sheet was preliminarily heated to 135°C by a series of rolls and subsequently passed through rolls rotating at different peripheral speeds maintained at a temperature of 135°C to stretch the sheet 4.5 folds in the longitudinal direction. The sheet was subsequently guided to a tenter, stretched 8.2 folds in the width direction at a temperature of 160°C, and subjected to a heat treatment at 168°C with the sheet relaxed to 6.7% in the width direction. After the cooling step at 100°C, the sheet was subsequently guided to the exterior of the tenter, and after releasing the clips at the sheet edges, the film surface (the surface of the side in contact with the casting drum) was subjected to corona discharge treatment in the atmosphere at a treatment intensity of 25 W·min/m$^2$, and the resulting film having a film thickness of 4 $\mu$m was wound as a film roll. The properties of the biaxially oriented polypropylene film of this Comparative Example and the capacitor properties were as shown in Table 1.

[Table 1]

| | | Ex. 1 | Ex. 2 | Ex. 3 | Ex. 4 | Ex. 5 | Comp. Ex. 1 | Comp. Ex. 2 | Comp. Ex. 3 | Comp. Ex. 4 | Comp. Ex. 5 |
|---|---|---|---|---|---|---|---|---|---|---|---|
| Temperature of the casting drum | - | 20 | 25 | 29 | 27 | 28 | 60 | 90 | 55 | 40 | 30 |
| Stretching ratio in the longitudinal direction | (folds) | 6.2 | 5.7 | 5.4 | 5.3 | 4.9 | 4. 7 | 5.0 | 4.2 | 5.8 | 4.5 |
| Stretching ratio in the width direction | (folds) | 10.8 | 10.2 | 10.5 | 9.5 | 8. | 10.0 | 10.0 | 8. | 10.5 | 8.2 |
| Temperature during the stretching in the width direction | (°C) | 155 | 153 | 157 | 153 | 155 | 150 | 165 | 155 | 155 | 160 |
| Heat treatment temperature in the first stage | (°C) | 130 | 128 | 136 | 137 | 130 | 140 | 165 | 130 | 165 | 168 |
| Heat treatment temperature in the second stage | (°C) | 140 | 138 | 150 | 149 | 140 | - | - | 140 | - | - |
| Film thickness | (μm) | 2.1 | 2.5 | 2.2 | 2. 9 | 2.1 | 2.5 | 2. 9 | 2.7 | 2. 9 | 4.0 |
| Meso-pentad fraction of the film which is not yet stretched | (%) | 92 | 90 | 85 | 82 | 84 | 0 | 0 | 18 | 19 | 78 |
| Crystallization temperature of the film, Tmc | (°C) | 114 | 114 | 116 | 117 | 112 | 123 | 112 | 115 | 125 | 119 |
| Total amount of phenol antioxidants remaining in the film | (%) | 0.25 | 0.25 | 0.33 | 0.30 | 0.43 | 0.43 | 0.60 | 0.25 | 0. 60 | 1.0 |
| Oxygen concentration in the supply hopper of the extruder | (%) | 0.001 | 0.06 | 0.001 | 0.8 | 0.05 | 21 | 21 | 3.8 | 0.001 | 21 |
| Meso-pentad fraction of the film | - | 0.985 | 0.985 | 0.983 | 0.983 | 0.978 | 0.950 | 0.978 | 0.983 | 0.983 | 0.973 |
| Molecular weight distribution of the film, Mw/Mn | - | 6.3 | 6.3 | 5.8 | 5.8 | 5.1 | 3.5 | 5.1 | 5.8 | 6 . 1 | 7.1 |
| Ash content of the film | ppm | 17 | 17 | 22 | 22 | 35 | 28 | 35 | 22 | 22 | 40 |
| Dielectric breakdown voltage of the film at 125°C, $B_{125}$ | (V/μm) | 590 | 562 | 513 | 493 | 468 | 371 | 386 | 408 | 456 | 390 |
| Volume resistivity of the film at 125°C | (Ω·cm) | $4.1 \times 10^{14}$ | $3.4 \times 10^{14}$ | $2.6 \times 10^{14}$ | $2.2 \times 10^{14}$ | $1.4 \times 10^{14}$ | $7.5 \times 10^{13}$ | $7.8 \times 10^{13}$ | $8.6 \times 10^{13}$ | $9.3 \times 10^{13}$ | $9.1 \times 10^{13}$ |
| $(B_{125}) / (B_{80})$ | - | 0.84 | 0.78 | 0.81 | 0.75 | 0. 68 | 0.63 | 0.68 | 0.65 | 0.73 | 0.65 |
| Sum of heat shrinkage in the longitudinal and width directions of the film (at 125°C for 10 minutes) | (%) | 3. 6 | 3.3 | 4.3 | 4.6 | 3.3 | 5.1 | 4.8 | 3.5 | 8.6 | 7.1 |

(continued)

| | | Ex. 1 | Ex. 2 | Ex. 3 | Ex. 4 | Ex. 5 | Comp. Ex. 1 | Comp. Ex. 2 | Comp. Ex. 3 | Comp. Ex. 4 | Comp. Ex. 5 |
|---|---|---|---|---|---|---|---|---|---|---|---|
| Crystallite size | (nm) | 10.1 | 10.3 | 10.8 | 11.1 | 12.2 | 13.0 | 13.4 | 12.8 | 12.5 | 12.4 |
| Processability of the capacitor element | - | A | B | A | B | B | A | A | B | B | D |
| Capacitor properties at 115°C | Voltage resistance | A | A | A | B | B | D | D | D | B | C |
| | Reliability | A | A | B | B | B | D | C | B | D | D |

Explanation of numerals

E:      power source
A:      ammeter
X:      sample
a:      main electrode
b:      counter electrode
c:      guard electrode


**Claims**

1.  A biaxially oriented polypropylene film having a volume resistivity at 125°C of at least 1.0 x $10^{14}$ $\Omega$·cm and a film dielectric breakdown voltage $B_{125}$ at 125°C of at least 420 V/$\mu$m.

2.  A biaxially oriented polypropylene film according to claim 1 wherein the film dielectric breakdown voltage $B_{125}$ at 125°C is at least 550 V/$\mu$m.

3.  A biaxially oriented polypropylene film according to claim 1 or 2 wherein ratio of the film dielectric breakdown voltage $B_{125}$ at 125°C to the film dielectric breakdown voltage $B_{80}$ at 80°C (($B_{125}$)/($B_{80}$)) is at least 0.70.

4.  A biaxially oriented polypropylene film according to any one of claims 1 to 3 wherein sum of heat shrinkage in the longitudinal and width directions of the film in heat treatment at 125°C for 10 minutes is up to 5.0%.

5.  A biaxially oriented polypropylene film according to any one of claims 1 to 4 wherein crystallization temperature Tmc of the film measured by DSC is up to 122°C.

6.  A biaxially oriented polypropylene film according to any one of claims 1 to 5 wherein the film has a meso-pentad fraction of at least 0.970 and a crystallite size of 9.0 to 12.0 nm.

7.  A biaxially oriented polypropylene film according to any one of claims 1 to 6 wherein the film has a molecular weight distribution Mw/Mn of at least 4.0 and up to 7.0.

8.  A metal layer laminated film wherein the metal layer is disposed on at least one surface of the biaxially oriented polypropylene film according to any one of claims 1 to 7.

9.   A film capacitor prepared by using a metal layer laminated film according to claim 8.

# Figure 1

EP 3 431 530 A1

Figure 2

Figure 3

<h1 style="text-align:center">INTERNATIONAL SEARCH REPORT</h1>

| | International application No. |
|---|---|
| | PCT/JP2017/003894 |

**A. CLASSIFICATION OF SUBJECT MATTER**
*C08J5/18*(2006.01)i, *H01G4/18*(2006.01)i, *B29C55/12*(2006.01)n, *B32B27/32*
(2006.01)n

According to International Patent Classification (IPC) or to both national classification and IPC

**B. FIELDS SEARCHED**

Minimum documentation searched (classification system followed by classification symbols)
C08J5/00-5/02, C08J5/12-5/22, H01G4/18, B29C55/12, B32B27/32

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 1-166955 A  (Hoechst AG.),<br>30 June 1989 (30.06.1989),<br>claims; page 3, upper right column, lines 6 to<br>10; page 4, upper right column, lines 11 to 16;<br>page 5, lower left column, line 15 to lower<br>right column, line 7; page 6, table II<br>& US 4975329 A<br>claims; column 3, lines 17 to 22; column 4,<br>lines 55 to 61; column 6, lines 48 to 66;<br>column 7, table II<br>& EP 318779 A2 | 1-3,5,8-9<br>4,7 |

| ☒ Further documents are listed in the continuation of Box C. | ☐ See patent family annex. |
|---|---|

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 26 April 2017 (26.04.17) | 16 May 2017 (16.05.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

| International application No. |
|---|
| PCT/JP2017/003894 |

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 55-77567 A (Hoechst AG.),<br>11 June 1980 (11.06.1980),<br>claims; page 3, upper left column, line 20 to<br>upper right column, line 10; page 3, table 1;<br>page 4, table 2<br>& US 4283453 A<br>claims; column 4, lines 1 to 14; column 4,<br>table 1; column 5, table 2<br>& EP 11796 A1 | 1-3,5,8-9<br>4,7 |
| X<br>Y | JP 2016-33211 A (Toray Industries, Inc.),<br>10 March 2016 (10.03.2016),<br>claims; paragraphs [0011] to [0013], [0015],<br>[0017], [0063]; examples; table 1<br>(Family: none) | 1-5,8-9<br>4,7 |
| X<br>Y | JP 2010-501712 A (Treofan Germany GmbH & Co.<br>KG., Borealis Technology Oy),<br>21 January 2010 (21.01.2010),<br>claims; paragraph [0015]; table 1<br>& US 2010/0047544 A1<br>claims; paragraph [0015]; table 1<br>& WO 2008/025796 A1    & EP 1894715 A1<br>& KR 10-2009-0050062 A   & CN 101511587 A | 1-3,5,7-9<br>4 |
| Y | WO 2009/060944 A1 (Oji Paper Co., Ltd.),<br>14 May 2009 (14.05.2009),<br>claims; paragraph [0025]<br>& CN 101848961 A        & KR 10-2010-0077035 A | 7 |
| A | JP 2007-84813 A (Toray Industries, Inc.),<br>05 April 2007 (05.04.2007),<br>paragraph [0025]<br>(Family: none) | 5 |
| A | JP 2014-231584 A (Oji Holdings Corp.),<br>11 December 2014 (11.12.2014),<br>claims; examples<br>(Family: none) | 1-9 |
| A | JP 2015-201610 A (Oji Holdings Corp.),<br>12 November 2015 (12.11.2015),<br>claims; examples<br>& EP 3127945 A1<br>claims; examples<br>& WO 2015/151591 A1     & CN 106133035 A<br>& KR 10-2016-0140632 A | 1-9 |
| A | JP 4-163042 A (Toray Industries, Inc.),<br>08 June 1992 (08.06.1992),<br>claims; table 1<br>(Family: none) | 1-9 |

Form PCT/ISA/210 (continuation of second sheet) (January 2015)

**INTERNATIONAL SEARCH REPORT**

International application No.

PCT/JP2017/003894

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-161799 A  (Toray Industries, Inc.), 10 June 2004 (10.06.2004), claims; paragraph [0093]; examples (Family: none) | 1-9 |
| A | JP 2001-250738 A  (Toray Industries, Inc.), 14 September 2001 (14.09.2001), claims; paragraph [0030] (Family: none) | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012209541 A

- JP HEI1053655 B

**Non-patent literature cited in the description**

- *Nikkei Electronics,* 17 September 2012, 57-62

- *Material Life,* 1997, vol. 9 (4), 180-187